# EUROPEAN PATENT APPLICATION

(11) **EP 3 470 371 A1**
(43) Date of publication of application: **17.04.2019**
(21) Application number: 17306399.1
(22) Date of filing: 16.10.2017
(51) Int. Cl.: C01B 37/02, C01B 33/18

(54) **METHOD OF CONTROLLING THE MORPHOLOGY OF MESOPOROUS SILICA PARTICLES**

(71) Applicant: Université de Strasbourg, 67000 Strasbourg (FR); CENTRE NATIONAL DE LA RECHERCHE SCIENTIFIQUE, 75016 Paris (FR)
(72) Inventor: TRAVAGLINI, Leana, 67000 STRASBOURG (FR); DA COLA, Luisa, 67000 STRASBOURG (FR)
(74) Representative: Novagraaf Technologies

(57) **Abstract**

The present invention relates to novel mesoporous silica particles and to a process of manufacture thereof. The invention also relates to the use of a bile acid or an alkali metal cation salt thereof, in the synthesis of mesoporous silica particles.

The present invention finds application in the fields of materials formulations, medical and biological applications, catalysis, adsorption techniques or templating of soft and hard materials.

## Description

### Technical background

The present invention relates to novel mesoporous silica particles and to a process of manufacture thereof. The invention also relates to the use of a bile acid or an alkali metal cation salt thereof, in the synthesis of mesoporous silica particles.

The present invention finds application in the fields of materials formulations, medical and biological applications, catalysis, adsorption techniques or templating of soft and hard materials.

In the following description, references between brackets (**[]**) directs to the list of references presented at the end of the description.

### State of the art

Since the discovery of mesoporous silica materials in the 1990s **[1],** mesoporous silica particles (MSPs) have been firmly established as ideal tools for a wide range of applications, ranging from catalysis, separation techniques to drug delivery **[2].**

Tailor-made mesostructure and ease of functionalization render them versatile tools in the preparation of functional materials, and efforts have been devoted to control mesostructure, size and geometry of pores, as well as to incorporate organic functionalities, in order to fulfil specific functions **[3].**

Among the many physicochemical properties, the overall morphology of MSPs resulted playing a fundamental role in determining the applicability of particles, since it determines the accessibility of the pores and the diffusion of molecules within them. To cite a few examples, it has been demonstrated that spherical particles are good stationary phases in separation techniques **[4],** rods and fibres have been reported as templates for metallic nanowires preparation **[5],** while flat particles, *e.g.* hexagonal platelets, due to the highly accessible pores are ideal to coat surfaces, as absorbers and supports for catalysis or controlled release **[6].**

Moreover, the shape of particles was proven to influence their bioactivity and biodistribution, crucial in biomedical applications **[7].** The control of morphology is therefore a major goal in the field, allowing the production of materials with enhanced performances according to the desired application.

However, a fine morphology control is still challenging due to the complexity of the system and to the number of factors controlling shape and size of particles. When the synthesis is performed in dilute conditions and a cooperative self-assembly mechanism most probably occurs **[3b,8],** according to the colloidal phase separation mechanism (CPSM) proposed by Yu *et al.* **[9],** the final overall morphology of particles synthesised from dilute solutions is mainly determined by the competition between the free energy of mesostructure formation (Δ*G*) and the free surface energy (*F*). Their contribution is determined by synthetic conditions, in particular the rates of hydrolysis and condensation of silicates, and the magnitude of interactions between the self-assembled templates and the growing silica polymer. It follows that all the parameters influencing these processes affect the shape of particles **[9,10].**

To date, many reports have described the preparation of particles of different shapes, such as hollow and solid spheres, rods, fibres, platelets, gyroids, discoids and tubules **[11],** and insights have been gained on the effect for instance of dilution, pH, temperature or type of co-solvents on the morphology of particulate materials both in acidic **[12]** and alkaline conditions **[13].**

Nevertheless, little work has been done, as far as Applicants are aware, in order to develop a facile and cost-effective synthetic strategy that allows obtaining plentiful morphologies in mild conditions and aqueous medium, by varying only one parameter in the synthesis.

In particular, the shape control in alkaline conditions, generally used in the synthesis of MCM-41 particles, is not trivial. At basic pH values the high rate of silica polymerization **[3d]** will tend to favour the formation of spherical particles, the product with the lowest surface energy.

### Description of the invention

The invention relates to a new facile and cost-effective process or method to synthetize mesoporous silica particles while controlling the morphology of said mesoporous silica particles. More generally, the invention relates to the use of a bile acid (BA) or an alkali metal cation salt thereof, in the synthesis of mesoporous silica particles.

To the knowledge of the Applicants, the use of bile acids or their alkali cation salts in such synthesis is unprecedented and it is the first time bile acids have been employed in the preparation of mesoporous silica particles: using binary template systems composed of bile acids and a quaternary ammonium surfactant (for example CTAB) it was possible to control the morphology of MCM-41 particles in alkaline conditions.

This gives the possibility to obtain particles of various morphologies, high porosity and remarkable features. For instance, according to the invention, hexagonal platelets of unusually small size (ca. 450 nm) and absence of intergrowth or twinned aggregation, and twisted rods with tuneable size and chiral pore channels were obtained.

Applicants have shown that it is possible to attain the control of MSPs overall morphology in alkaline conditions through the use of quaternary ammonium surfactant/BAs catanionic mixtures, reporting for the first time the use of BAs as templates in the synthesis of mesoporous silica particles.

This method allowed to obtain MCM-41 submicrometer MSPs of various shapes, with highly ordered pores and high porosity. Using quaternary ammonium surfactant/BA binary mixtures Applicants were able to synthesize particles of remarkable features.

In particular, at 25 °C and employing lithocholic acid (LCA), Applicants obtained hexagonal platelets not only smaller than the platelets generally described but, most importantly, not showing any intergrowth or twined aggregation.

This renders possible their integration onto surfaces ensuring high contact surface area and high accessibility to pores, necessary requirements for applications such as sorption or catalysis, for instance.

At higher temperature, twisted rods of tuneable size were obtained, their chiral pore channels render them attractive as reactors for chiral molecules, templates or support for separations.

In one aspect, the invention relates to the use of a bile acid or an alkali metal cation salt thereof, in the synthesis of mesoporous silica particles.

Advantageously, the invention relates to a method of synthesis of mesoporous silica particles comprising the use of a bile acid or alkali metal cation salt thereof.

Advantageously, the use according to the invention may be the use of binary mixtures of quaternary ammonium surfactant/bile acid, or an alkali metal cation salt thereof, in the synthesis of mesoporous silica particles, preferably in an aqueous medium.

In another aspect, the invention also relates to a novel process or method of synthesis of mesoporous silica particles comprising a step of mixing, in an aqueous medium, in the presence of a catalyst:
- quaternary ammonium surfactant,
- a bile acid, or an alkali metal cation salt thereof, preferably a sodium salt,
- a silicon alkoxide, and
- optionally an alkoxysilane bearing a responsively cleavable bond.

Advantageously, in the process, method or use according to the invention, the molar ratio of quaternary ammonium surfactant/bile acid or an alkali metal cation salt thereof can be comprised between 1 and 25, preferably between 1.2 and 23.

Advantageously, in the process, method or use according to the invention, the mass ratio of bile acid or an alkali metal cation salt thereof/ quaternary ammonium surfactant can be comprised between 0.025 and 0.90. The bile acid, or alkali metal cation salt thereof, mass may represent from 2.5 wt% to 90 wt% of the mass of quaternary ammonium surfactant). For example, the mass ratio of bile acid or an alkali metal cation salt thereof/ quaternary ammonium surfactant can be 2.5, 5, 10, 15, 20, 25, 30, 40, 50, 75, 80 or 90 wt%.

Advantageously, in the process, method or use according to the invention, the molar ratio of quaternary ammonium surfactant/silicon alkoxide can be comprised between 0.06 and 0.14, preferably between 0.076 to 0.126 and most preferably between 0.09 and 0.1.

Advantageously, in the process, method or use according to the invention, the catalyst may be a base. The base can be chosen in the group of sodium or potassium hydroxide and aqueous ammonia. When the base is ammonia, the aqueous medium comprises between 0.5 and 5 wt% of ammonia, preferably between 1 and 3 wt% and more preferably 1.5 wt%. When the base is sodium or potassium hydroxide, the concentration of the base in the aqueous medium is comprised between 0.04 to 0.12 mol/L.

Advantageously, in the process, method or use according to the invention, the molar concentration of the silicon alkoxide in the aqueous medium may be comprised between 0.02 and 0.1 mol/L, preferably between 0.04 and 0.07 mol/L and more preferably 0.048 mol/L. The silicon alkoxide can be chosen in the group consisting of silicon alkoxides of formula I:

Si(OR)₄ Formula I

wherein R is a linear or branched alkyl chain comprising from 1 to 3 carbon atoms, optionally comprising heteroatoms chosen in the group comprising N, S, P, Se and/or O.

Preferably, the silicon alkoxide is chosen in the group consisting of tetrapropyl orthosilicate (SiOPr₄), tetraethyl orthosilicate (SiOEt₄) and tetramethyl orthosilicate (SiOMe₄), preferably the silicon alkoxide is tetraethyl orthosilicate (SiOEt₄).

Advantageously, in the process, method or use according to the invention, the concentration of the alkoxysilane bearing a responsively cleavable bond in the aqueous medium may be comprised between 5 and 50 mol% of the silicon alkoxide, preferably 5 to 20 mol% and more preferably 10 mol%. Preferably, the alkoxysilane bearing a responsively cleavable bond is an alkoxysilane containing covalent bonds that are cleavable upon exposure to a specific stimulus. The alkoxysilane bearing a responsively cleavable bond can be chosen in the group consisting of alkoxysilanes of formula IV:

(R"O)₃Si-R'-Si(OR")₃) Formula IV

wherein R", identical or different, are linear or branched alkyl chains comprising from 1 to 3 carbon atoms and R' is a linear or branched alkyl chain or an alkylaryl group comprising from 2 to 20 carbon atoms and comprising at least one responsively cleavable covalent bond chosen in the group comprising:

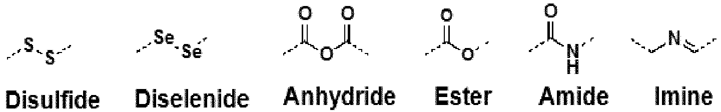

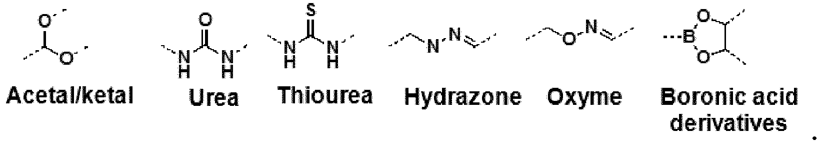

Preferably, the responsively cleavable covalent bond may be chosen in the group comprising disulfide (-S-S-), imine (=C=N-), ester (-C(O)-O-), amide (-C(O)-N-), or a photo-cleavable group. Preferably, the alkoxysilane bearing a responsively cleavable bond may be chosen in the group consisting of alkoxysilanes of formula IVa:

(R"O)₃Si-R^{a}-CLV-R^{b}-Si(OR")₃) Formula IVa

Wherein R" is as defined above, R^{a} is a linear or branched alkyl chain or an aryl group, comprising from 1 to 10 carbon atoms, optionally comprising heteroatoms chosen in the group consisting of O, N and/or S, R^{b} is a linear or branched alkyl chain or an aryl group, comprising from 1 to 10 carbon atoms, optionally comprising heteroatoms chosen in the group consisting of O, N and/or S, R^{a} and R^{b} being identical or different, and *-CLV-* is chosen in the group of responsively cleavable covalent bonds comprising:

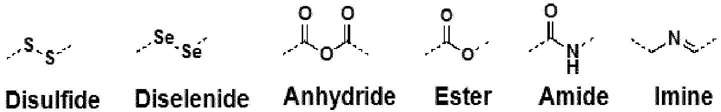

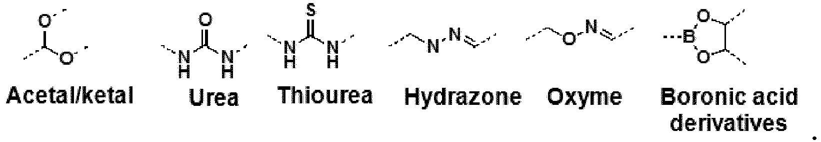

For example, R^{a} and R^{b} may independently represent -CH₂-, -(CH₂)₂-, - (CH₂)₃-, -(CH₂)₄-, or phenyl. Preferably, the responsively cleavable covalent bond may be chosen in the group comprising disulfide, imine, ester, amide or photo-cleavable group. Preferably, the alkoxysilane bearing a responsively cleavable bond is bis(3-triethoxysilylpropyl)disulphide (BTSPD) :

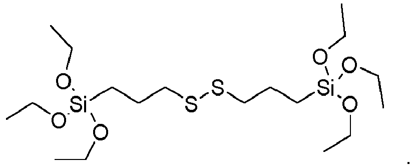

Advantageously, the responsively cleavable bond can be responsive to 1) redox stimulus, 2) change in pH), 3) enzymatic cleavage, 4) presence of UV light. Therefore, by ways of examples the bridging group R' could bear a disulphide bond (-S-S-, redox-responsive), an imine (=C=N-, pH responsive), an ester group (-CO-OR-, pH responsive), an amide bond (-CO-NH-, enzyme responsive), a photo-cleavable group (e.g. coumarine or 3-nitrobenzyl alcohol derivatives, UV light-responsive). For example, the disulphide bond borne by BTSPD can be cleaved by reducing agents such as reduced glutathione (GSH), sodium borohydride (NaBH₄) and dithiothreitol (DTT). The term "responsively cleavable", when referring to a chemical bond, polymer fragment or linking group, refers to a covalent bond, polymer fragment or linking group that is cleaved upon application of one of the aforementioned particular signals. Generally speaking, the presence of a responsively cleavable bond, polymer fragment or linker moiety within a mesoporous silica particle of the invention, confers to the particle its degradable properties (the property of structurally breaking down upon application of a specific signal/stimulus, akin to "self-destructive" behavior). BTSPD and other alkoxysilanes bearing a responsively cleavable bond have been successfully employed in the art **[20].**

Advantageously, in the process, method or use according to the invention, combining silicon alkoxide and alkoxysilanes bearing a responsively cleavable bond allows preparing particles that can be degraded on demand. This feature can play an important role in applications in which the particles are used as templates or supports, for instance.

Advantageously, in the process, method or use according to the invention, the molar concentration of the bile acid, or alkali metal cation salt thereof, in the aqueous medium may be comprised between 0.23 and 4.00 mmol/L. The bile acid, or alkali metal cation salt thereof the bile acid can be of formula III: 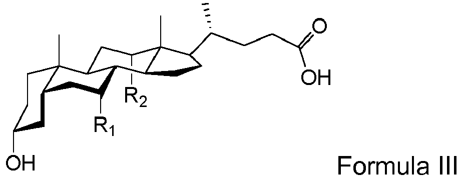 or alkali metal cation salt thereof, preferably sodium salt,
wherein R₁ and R₂, identical or different, represent either -H or -OH. Preferably, the bile acid may be chosen in the group consisting of cholic acid (CA), lithocholic acid (LCA) and deoxycholic acid (DCA) or alkali metal cation salts thereof, preferably sodium or potassium salts (NaC, NaLC, NaDC or KC, KLC, KDC).

Advantageously in the process, method or use according to the invention, the molar concentration of the quaternary ammonium surfactant in the aqueous medium may be comprised between 4.0 and 6.0 mM, preferably 5.2 mM. The quaternary ammonium surfactant can be chosen in the group consisting of compounds of formula II:

R³-N⁺(R⁴)₃,X⁻ Formula II

wherein:
- R³ is a C₁₀ to C₂₀ linear or branched alkyl chain,
- R⁴, identical or different, are C₁ to C₃ alkyl chains, and
- X⁻ is an halide anion, preferably chloride or bromide.

Preferably, R³ is a C₁₆ alkyl chain and R⁴ groups are methyl groups, more preferably the quaternary ammonium surfactant may be chosen in the group of hexadecyltrimethylammonium halides of formula IIa:

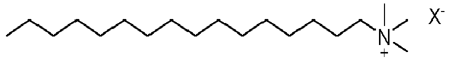

X = Br⁻, Cl⁻ Formula IIa,

and most preferably, the quaternary ammonium surfactant is hexadecyltrimethylammonium bromide also known as CTAB.

Advantageously, the process or method according to the invention, may comprise the steps of:
a) mixing, in an aqueous medium:
   - a catalyst,
   - a quaternary ammonium surfactant,
   - a bile acid, or alkali metal cation salt thereof,
   - a silicon alkoxide, and
   - optionally an alkoxysilane bearing a responsively cleavable bond,
   to obtain a reaction mixture wherein,
   - the molar ratio quaternary ammonium surfactant/bile acid, or alkali metal cation salt thereof, is comprised between 1 and 25, preferably between 1.2 and 23, and
   - the molar ratio of quaternary ammonium surfactant/silicon alkoxide is between 0.06 and 0.14, preferably between 0.076 to 0.126 and most preferably between 0.09 and 0.1,
b) stirring the reaction mixture obtained in step a) thereby producing the mesoporous silica particles.

Advantageously, in the process or method according to the invention, in step a), the quaternary ammonium surfactant, the bile acid or alkali cation salt thereof and the catalyst may be allowed to stir in the aqueous medium before the silicone alkoxide (and optionally the alkoxysilane bearing a responsively cleavable bond) is(are) added.

Advantageously, in the process or method according to the invention, in step b), the mixture may be allowed to stir during a period of time comprised between 60 and 120 minutes. Step b) can further comprise leaving the mixture under static conditions for a period of time comprised between 15 and 30 hours.

Advantageously, in the process or method according to the invention, the reaction may be carried out at a temperature ≥ 25°C, preferably at a temperature comprised between 25 and 60°C, more preferably at a temperature comprised between 25 and 50°C. Preferably, step a) and b) are carried out at the same temperature.

Advantageously, the process or method according to the invention may further comprise a step c) of separating the particles from the mixture. Preferably, step c) comprises at least one a step of sonicating and/or centrifuging the mixture to obtain a precipitate.

Advantageously, the process or method according to the invention may further comprise a step d) of washing the precipitate with water and an alcohol, preferably ethanol.

Advantageously, the process or method according to the invention may further comprise a step e) of calcination at a temperature comprised between 400 and 600°C, preferably between 480 and 570°C, and more preferably between 500 and 550°C and for a period of time comprised between 4 and 10 hours, preferably between 4 and 8 hours, and more preferably between 5 and 7 hours. Alternatively, step e) can be an extraction in an alcohol solvent (for example ethanol) at a temperature comprised between 60 and 90°C, preferably at a temperature of 80°C and for a period of time comprised between 18 hours and 48 hours, preferably 24 hours; the particles are then centrifuged and washed several times with the alcohol solvent, and allowed to dry overnight under reduced pressure. Preferably, the alcohol solvent used for the extraction comprises drops of concentrated aqueous HCl.

Advantageously, in the process, method or use according to the invention, the aqueous medium may further comprise an organic polar solvent, preferably chosen in the group of C₁ to C₄ alcohols, preferably methanol, ethanol or n-butanol and more preferably methanol or ethanol. Preferably, the volume ratio organic polar solvent/water is comprised between 0.003 and 0.2.

Advantageously, the invention relates to a process or method of synthesis of mesoporous silica particles, comprising the steps of:
a) mixing, in an aqueous medium:
   - a catalyst,
   - a quaternary ammonium surfactant,
   - a bile acid, or alkali metal cation salt thereof, and
   - a silicon alkoxide, and
   - optionally an alkoxysilane bearing a responsively cleavable bond,
   to obtain a reaction mixture wherein,
   - the molar ratio of quaternary ammonium surfactant/bile acid or alkali metal cation salt thereof is comprised between 1 and 25, preferably between 1.2 and 23, and
   - the molar ratio of quaternary ammonium surfactant/silicon alkoxide is comprised between 0.06 and 0.14, preferably between 0.076 to 0.126 and most preferably between 0.09 and 0.1,
b) stirring the reaction mixture obtained in step a) during a period of time comprised between 60 and 120 minutes, optionally leaving the mixture under static conditions for a period of time comprised between 15 and 30 hours, thereby producing the mesoporous silica particles,
c) separating the particles from the mixture to obtain a precipitate,
d) optionally washing the precipitate,
e) optionally calcining or extracting the washed precipitate.

Advantageously, the invention relates to a process or method of synthesis of mesoporous silica particles, comprising the steps of:
a) mixing, in an aqueous medium:
   - a catalyst,
   - a quaternary ammonium surfactant,
   - a bile acid, or alkali metal cation salt thereof, and
   - a silicon alkoxide, and
   - optionally an alkoxysilane bearing a responsively cleavable bond,
   to obtain a reaction mixture wherein,
   - the molar ratio of quaternary ammonium surfactant/bile acid or alkali metal cation salt thereof is comprised between 1 and 25, preferably between 1.2 and 23, and
   - the molar ratio of quaternary ammonium surfactant/silicon alkoxide is comprised between 0.06 and 0.14, preferably between 0.076 to 0.126 and most preferably between 0.09 and 0.1,
b) stirring the reaction mixture obtained in step a) during a period of time comprised between 60 and 120 minutes, optionally leaving the mixture under static conditions for a period of time comprised between 15 and 30 hours, thereby producing the mesoporous silica particles,
c) separating the particles from the mixture by sonicating and/or centrifuging the mixture at least once to obtain a precipitate,
d) washing the precipitate with water and an alcohol, preferably ethanol,
e) calcining the precipitate at a temperature comprised between 400 and 600°C, preferably between 480 and 570°C, and more preferably between 500 and 550°C and for a period of time comprised between 4 and 10 hours, preferably between 4 and 8 hours, and more preferably between 5 and 7 hours, or extracting the precipitate in an alcohol solvent (for example ethanol) at a temperature comprised between 60 and 90°C, preferably at a temperature of 80°C and for a period of time comprised between 18 hours and 48 hours, preferably 24 hours, the particles are then centrifuged and washed several times with the alcohol solvent, and allowed to dry overnight under reduced pressure, thereby obtaining dry mesoporous silica particles,
wherein step a) and b) are carried out at a temperature ≥ 25°C, preferably at a temperature comprised between 25 and 60°C, more preferably at a temperature comprised between 25 and 50°C.

In yet another aspect, the invention also relates to the mesoporous silica particle obtained by the process or method of the invention.

The invention also concerns mesoporous silica particles characterized in that the pore diameter size of said particles is < 4 nm, preferably < 3.5 nm or < 3 nm and more preferably comprised between 2.5 and 3 nm.

Advantageously, the mesoporous silica particles of the invention can be of various shapes. The shape of the particles can be spherical, hexagonal, oblate or twisted rod. Preferably, shape of the particles is hexagonal. Advantageously, the method or process of the invention leads to hexagonal mesoporous silica particles also referred to as hMPs.

Advantageously, the mesoporous silica particles according to the invention may have a pore diameter size comprised between 2.0 and 3.5 nm, preferably between 2.5 and 3.2 nm.

By way of illustration, the mesoporous silica particles of spherical shape can have a pore diameter size comprised between 2.5 and 3 nm. The mesoporous silica particles of hexagonal shape can have a pore diameter size comprised between 2.0 and 3.5 nm, preferably comprised between 2.5 and 3.0 nm. The mesoporous silica particles of twisted rod shape can have a pore diameter size comprised between 2.5 and 3.5 nm.

Advantageously, the mesoporous silica particles according to the invention may have a related size distribution comprised between 200 and 1100 nm, preferably between 200 and 700 and more preferably between 350 and 550 nm.

Advantageously, the mesoporous silica particles according to the invention may have a related height comprised between 60 and 150 nm, preferably between 80 and 110 nm.

Advantageously, the mesoporous silica particles according to the invention may have a hexagonal shape and may have a related size distribution of 440 ± 85 nm and a related height comprised between 80 and 110 nm.

Advantageously, the mesoporous silica particles according to the invention may have a twisted rod shape and may have a cross-section diameter comprised between 60 and 180 nm.

Advantageously, the mesoporous silica particles according to the invention may have a twisted rod shape and have a twist pitch comprised between 40 and 100 nm.

Advantageously, the mesoporous silica particles according to the invention can be chiral. In particular, mesoporous silica particles having a shape of twisted rods can show chiral pores running along the particles.

Advantageously, the mesoporous silica particles according to the invention do not show intergrowth or twinned aggregation. It is meant by "intergrowth", the growth of separately nucleated particles into each other forming aggregates of particles. It is meant by "twinned aggregation", the presence of aggregates formed by individual crystalline particles joined together according to a specific orientation.

In another aspect, the invention relates to the use of a mesoporous silica particle according to the invention in materials formulations, medical and biological applications, catalysis, adsorption techniques or templating of soft and hard materials. The mesoporous silica particles of the invention find applications in methods of adsorption, methods of targeted release, methods of catalysis, methods of or methods of material templating.

Other advantages can appear to the one skilled in the art when reading the following examples and associated figures, given for illustration purpose in a non-limitative way.

### Brief description of the figures

- Figure 1 represents SEM images of example samples 1 to 17. The white scale bar on each SEM picture represents 500 nm. SEM images are a representation of a) sample 1, b) sample 2, c) sample 3, d) sample 4, e) sample 5 , f) sample 6, g) sample 7, h) sample 8, i) sample 9, j) sample 10, k) sample 11, l) sample 12, m) sample 13, n) sample 14, o) sample 15, p) sample 16, q) sample 17.
- Figure 2 represents TEM images of example samples 1 to 17. The white scale bar on each SEM picture represents 100 nm. TEM images are a representation of a) sample 1, b) sample 2, c) sample 3, d) sample 4, e) sample 5 , f) sample 6, g) sample 7, h) sample 8, i) sample 9, j) sample 10, k) sample 11, l) sample 12, m) sample 13, n) sample 14, o) sample 15, p) sample 16, q) sample 17.
- Figure 3 represents SAXS patterns (l/a.u in function of q/nm⁻¹) of example samples 1 to 6. SAXS patterns are patterns of a) sample 1, b) sample 2, c) sample 3, d) sample 4, e) sample 5, f) sample 6.
- Figure 4 represents SAXS patterns (l/a.u in function of q/nm⁻¹) of example samples 7 to 12. SAXS patterns are patterns of g) sample 7, h) sample 8, i) sample 9, j) sample 10, k) sample 11, l) sample 12.
- Figure 5 represents SAXS patterns (l/a.u in function of q/nm⁻¹) of example samples 13 to 17. SAXS patterns are patterns of m) sample 13, n) sample 14, o) sample 15, p) sample 16, q) sample 17.
- Figure 6 represents the nitrogen adsorption/desorption isotherms (quantity adsorbed in cm³/g STP in function of the relative pressure in P/P⁰) of a) sample 1, b) sample 2, c) sample 3, d) sample 4, e) sample 5 , f) sample 6. The related pore width distributions are reported in the insets (pore volume in cm³/g in function of the pore width in nm).
- Figure 7 represents the nitrogen adsorption/desorption isotherms (quantity adsorbed in cm³/g STP in function of the relative pressure in P/P⁰) of g) sample 7, h) sample 8, i) sample 9, j) sample 10, k) sample 11, l) sample 12. The related pore width distributions are reported in the insets (pore volume in cm³/g in function of the pore width in nm).
- Figure 8 represents the nitrogen adsorption/desorption isotherms (quantity adsorbed in cm³/g STP in function of the relative pressure in P/P⁰) of m) sample 13, n) sample 14, o) sample 15, p) sample 16, q) sample 17. The related pore width distributions are reported in the insets (pore volume in cm³/g in function of the pore width in nm).
- Figure 9 represents XPS survey spectrum (intensity in 10⁴ cps in function of BE in eV) of (a) pristine hMPs and (b) NH2-hMPs. In (b), the presence of N(1s) peak at 402 eV demonstrates the functionalization of hMPs.
- Figure 10 represents TGA thermograms of hMPs (black line) and NH₂-hMPs (grey line) recorded under 20 mL/min air flow at a heating rate of 10 °C/min (weight in % in function of temperature).
- Figure 11 represents SEM images at different magnification of the monolayer prepared by reacting NH₂-hMPs with isocyanate-tethered glass slides from sample 1.
- Figure 12 represents XPS survey analysis of NH₂-hMPs onto the glass plate surface.
- Figure 13 represents SEM images of degradable MSPs of sample 18, white scale bar represents a) 1µm, b) 10 µm.
- Figure 14 represents TGA profile of degradable MSPs of sample 18 recorded under 20 mL/min air flow at a heating rate of 10 °C/min (weight loss in % in function of temperature in °C).
- Figure 15 represents SAXS pattern of degradable MSPs of sample 18 (l/a.u in function of q/nm⁻¹).
- Figure 16 represents STEM images of degradable MSPs of sample 18 stirred at 37 °C in presence of GSH 10 mM in PBS (pH 7.4) at a) to, b) 2 days and c) 5 days (white scale bar represents 2 µm).

### EXAMPLES

### 1. Materials and Methods

### Materials

Hexadecyltrimethylammonium bromide (CTAB, 99+%) was purchased from ACROS ORGANICS. Lithocholic acid (LCA, ≥ 95%), cholic acid (CA, ≥ 98%), deoxycholic acid (DCA, ≥ 98%), sodium deoxycholate (NaDC, ≥ 97%), tetraethyl orthosilicate (TEOS, ≥ 99.0 %, GC), 3-(triethoxysilyl)propyl isocyanate (TESPIC), 3-aminopropyl triethoxysilane (APTES), and all solvents were purchased from Sigma Aldrich. Aqueous ammonia (NH₃, 28 wt. %) was purchased from VWR Chemicals. All reagents and solvents were used as obtained.

### Preparation of the particles

CTAB (50 mg, 0.14 mmol) and LCA (4.6 mg, 0.012 mmol) were dissolved in distilled H₂O (25 mL) at 25 °C and stirred, aq. NH₃ 28 wt. % (1.42 mL, 22.90 mmol) was added and the mixture stirred at 750 rpm for 15 min. MeOH (0.10 mL, 3.95 mmol) and TEOS (0.25 mL, 1.11 mmol) were then added and the mixture allowed to stir for 90 min. The system was left under static conditions for further 20 h. The mixture was then centrifuged and the precipitate washed with distilled H₂O (x3) and EtOH (x2). The particles were purified by means of ultracentrifugation and the surfactants removed through calcination at 530 °C for 6 h.

When LCA was replaced by DCA and CA equimolar amounts (0.012 mmol) were used. For the synthesis of the twisted rods the same protocol was used, but the reaction was performed at 50 °C.

### Synthesis of particles at different CTAB/NaDC ratios

The particles were prepared by using a modified Stöber procedure **[14].** CTAB and NaDC were used as structure directing agents. The reactions were performed by keeping constant the amount of CTAB and systematically increasing the amount of NaDC, up to 90 wt.%, calculated over the amount of CTAB used. In a typical synthesis, CTAB (50 mg, 0.14 mmol) and NaDC were dissolved in distilled H₂O (25 mL) at 25 °C, aq. NH₃ 28 wt.% (1.42 mL, 22.90 mmol) was added and the mixture stirred at 750 rpm for 15 min. MeOH (0.1 mL, 3.95 mmol) and TEOS (0.25 mL, 1.11 mmol) were then added and the mixture allowed to stir for 90 min. The system was left under static conditions for further 20 h. The mixture was then centrifuged and the precipitate washed with distilled H₂O (x3) and EtOH (x2). The particles were purified by means of ultracentrifugation and the surfactants removed through calcination at 530 °C for 6 h, unless otherwise stated.

MSPs samples n°1 to 17 were prepared according to the above described protocols. Example samples 1 to 17 synthesis conditions are summarized in the following table:

**Table 1: Examples 1 to 17. Synthesis of particles at different CTAB/NaDC ratios (n/a = not applicable). Samples 16 and 17 are comparative examples.**

| Example n° | silicone alkoxide | CTAB amount (mg) | bile acid type | bile acid / sodium salt amount (mg) | Temperature (°C) |
|---|---|---|---|---|---|
| 1 | TEOS | 50 | LCA | 4.60 | 25 |
| 2 | TEOS | 50 | DCA | 4.71 | 25 |
| 3 | TEOS | 50 | CA | 4.90 | 25 |
| 4 | TEOS | 50 | LCA | 4.60 | 50 |
| 5 | TEOS | 50 | DCA | 4.71 | 50 |
| 6 | TEOS | 50 | CA | 4.90 | 50 |
| 7 | TEOS | 50 | NaDC | 1.25 | 25 |
| 8 | TEOS | 50 | NaDC | 2.50 | 25 |
| 9 | TEOS | 50 | NaDC | 5.00 | 25 |
| 10 | TEOS | 50 | NaDC | 7.50 | 25 |
| 11 | TEOS | 50 | NaDC | 15.00 | 25 |
| 12 | TEOS | 50 | NaDC | 20.00 | 25 |
| 13 | TEOS | 50 | NaDC | 25.00 | 25 |
| 14 | TEOS | 50 | NaDC | 37.50 | 25 |
| 15 | TEOS | 50 | NaDC | 45.00 | 25 |
| 16 | TEOS | 50 | n/a | n/a | 25 |
| 17 | TEOS | 50 | n/a | n/a | 50 |

### Preparation of amino-functionalized hexagonal platelets (NH₂-hMPs)

15 mg of hexagonal platelets were suspended in 3 mL of dry toluene and sonicated for 10 minutes. APTES (15 µL) was added and the mixture was stirred at 25 °C overnight. The particles were collected by centrifugation, washed with toluene (1 mL x 1) and EtOH (1 mL x 3).The amino functionalized platelets (NH₂-hMPs) was recovered, dried under reduced pressure, and characterized by ζ potential determination, TGA (thermogravimetric analysis) and XPS analysis (X-ray photoelectron spectroscopy.

### Monolayer preparation

A monolayer assembly of the hexagonal platelets formed using LCA (hMPs) was obtained through covalent linkage on glass plates, following a modified procedure well-established to prepare assembled monolayer of zeolites crystals **[15].** Briefly, the monolayer was prepared by reacting glass plates previously tethered with isocyanate groups with NH₂-hMPs. The glass plates were first cleaned and activated by immersion in a H₂SO₄/H₂O₂ 3:1 mixture for 10 minutes at 100 °C. The solution was removed and the plates washed thoroughly with mq H₂O and dried under N₂ flow. The glass plates were tethered with isocyanate groups by refluxing them in a 5 wt.% solution of 3-(triethoxysilyl)propyl isocyanate (TESPIC) in dry toluene overnight under N₂ atmosphere. The plates were isolated and washed with toluene and EtOH, finally dried under N₂ flow. The glass slides were then sonicated for 5 min in a dispersion of NH₂-hMPs (1 mg/mL) in dry toluene. The plates were isolated and washed with toluene and EtOH, finally dried under nitrogen flow.

### 2. Characterization

Scanning electron microscopy and scanning transmission electron microscopy (SEM and STEM) images were recorded with a FEI Quanta FEG 250 instrument (FEI corporate, Hillsboro, Oregon, USA) with acceleration voltage of 20 kV and operation distance of 10 mm. The SEM samples were prepared by drop-casting a dispersion of particles in EtOH onto a glass cover slip, subsequently sputter coated with Au (Emitech K575X Peltier cooled) for 35 s at 60 mA prior to fixation on Al support. The STEM samples prepared by depositing a drop of the aqueous dispersions of particles in (0.1 mg/mL) onto Formvar-coated Cu grids (400 mesh), leaving the drop in contact with the grid 1 min, removing the drop and allowing the grid to dry overnight prior visualization.

Transmission electron microscopy (TEM) samples were analysed on a FEI/PHILIPS CM120 system operating at 100 kV. Samples were prepared drop casting dispersions of particles in EtOH (0.1 mg/mL) onto Formvar-coated Cu grids (400 mesh) and allowed to dry overnight prior visualization.

Nitrogen physisorption isotherms of dried samples were obtained with a Micromeritics ASAP-2020 instrument. The samples were degassed at 250 °C for 4h and N₂ adsorption/desorption measurement was performed at -196 °C. The surface areas were calculated by Brunauer-Emmett-Teller (BET) method **[16].** The BET surface area analysis was performed in the relative pressure p/p⁰ range 0.06-0.3. The pore size distributions and pore volumes were calculated by DFT method on the adsorption branch and using a cylindrical model. The total pore volumes were estimated at 0.99 p/p⁰. The small-angle X-ray scattering (SAXS) setup comprised the SAXSess mc2 instrument from Anton Paar GmbH (Graz, Austria), containing a slit collimation system, and the PW3830 laboratory X-ray generator (40 kV, 50 mA) with a long-fine focus sealed X-ray tube (CuKα wavelength of λ = 0.1542 nm) from PANalytical. Detection was performed with the 2D imaging-plate reader Cyclone® by Perkin Elmer. Measurements were performed on powder samples for 5min and the data collected up to a scattering vector q value of 7 nm⁻¹, where q = (4πsinθ)/λ and 2θ the scattering angle. The 2D data were converted to 1 D data by using SAXSQuant software (Anton Paar GmbH, Austria) and corrected for the background. The formula d=2π/q was used to calculate the d spacing.

ζ potential measurements were conducted on a Delsa Nano C Particle Analyzer (Beckman Coulter, Brea, CA, USA; λ= 655 nm). The measurements were performed in PBS buffer (pH 7.4; ≈ 0.1 mg/mL).

X-ray Photoelectron Spectroscopy (XPS) analysis was performed using a K-Alphatm+ X-ray Photoelectron Spectrometer (XPS) System (Thermo Scientific). Monochromatic Al K alpha X-rays were used (15 keV, 72 W, 200 µm spot). Spectra were measured using a pass energy of 200 eV for survey spectra end 50 eV for core level spectra. The samples of particles were prepared by drop-casting an ethanolic dispersion (0.1 mg/mL) of the particles onto a glass coverslip pre-coated with Au (Emitech K575X peltier cooled) for 3 min at 60 mA. The monolayer was analyzed as such after its preparation.

Thermogravimetric analysis (TGA) was conducted on a Netzsch model STA 449 fi Jupiter instrument. The samples (1-3 mg) were kept at 100 °C for 15 minutes for stabilization, heated from 25 to 800 °C with heating rate of 10 °C/min, held at 800 °C for further 15 minutes, and finally cooled. The analyses were performed under a 20 mL/min air flow.

Example samples 1 to 17 characteristics are compiled in table 2:

**Table 2: Particles shapes and properties (a: cross-section diameter is given for rods, b: rod length is given for rods, c: toroid diameter is given for toroids).**

| Example n° | particles shape | average pore diameter (N₂ ads) (nm) | average Pore diameter (SAXS) (nm) | total pore volume (cm³/g) | BET specific area (m²/g) | related size distribution (nm) | height range (nm) |
|---|---|---|---|---|---|---|---|
| 1 | hexagonal platelet | 2.9 | 2.9 | 0.77 | 1054 | 440 ± 85 | 80 - 110 |
| 2 | hexagonal platelet | 2.8 | 2.9 | 0.64 | 1228 | 483 ± 58 | 170 - 270 |
| 3 | oblate | 2.7 | 2.8 | 0.79 | 1509 | 423 ± 43 | 180 - 350 |
| 4 | twisted rod | 3.3 | 3.4 | 0.92 | 1319 | 537 ± 109 | 76 ± 13^{a} |
| 5 | twisted rod | 3.4 | 3.3 | 1.09 | 1250 | 321 ± 20 | 101 ± 16^{a} |
| 6 | twisted rod | 3.4 | 3.3 | 0.99 | 1130 | 273 ± 32 | 148 ± 26^{a} |
| 7 | oblate | 3.0 | 2.9 | 0.61 | 1294 | 360 ± 56 | 220 - 280 |
| 8 | oblate | 2.6 | 2.8 | 0.60 | 1248 | 408 ± 55 | 210 - 270 |
| 9 | hexagonal platelet | 2.5 | 2.7 | 0.51 | 1063 | 498 ± 85 | 190 - 270 |
| 10 | hex. platelets + rods | 2.4 | n/a | 0.57 | 1189 | plat. 450 - 600 | 140 - 200 |
| | | | | | | rods 250 - 350 | 100 - 150^{a} |
| 11 | heterogeneous | 2.3 | n/a | 0.48 | 1042 | 250-260 | - |
| 12 | short fibres -toroids | 2.6 | n/a | 0.69 | 1228 | 180-400 | 75-200 |
| 13 | toroids + rods | 3.0 | n/a | 0.31 | 671 | 150-300 | 90-140^{b} |
| | | | | | | 300-700^{c} | 60-80^{a} |
| 14 | spherical + amorphous | 3.0 | n/a | 0.62 | 961 | 300-7000 | n/a |
| 15 | spherical + amorphous | 3.0 | n/a | 0.65 | 984 | 200-12000 | n/a |
| 16 | spherical | 3.0 | 3.0 | 0.82 | 1406 | 246 ± 29 | n/a |
| 17 | spherical | 3.1 | 3.0 | 0.80 | 1365 | 300 ± 63 | n/a |

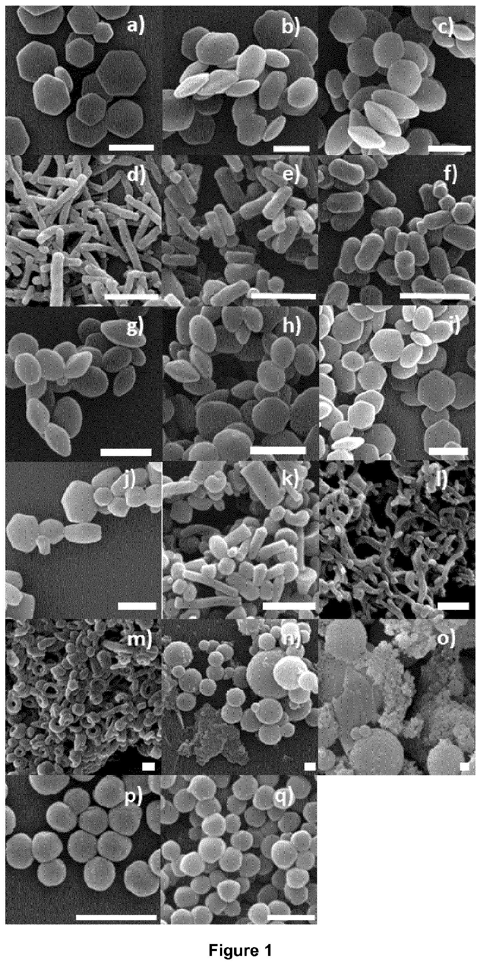

The morphology of the materials was first analysed by scanning electron microscopy (SEM) that showed the presence of particles with a well-defined geometry (figure 1).

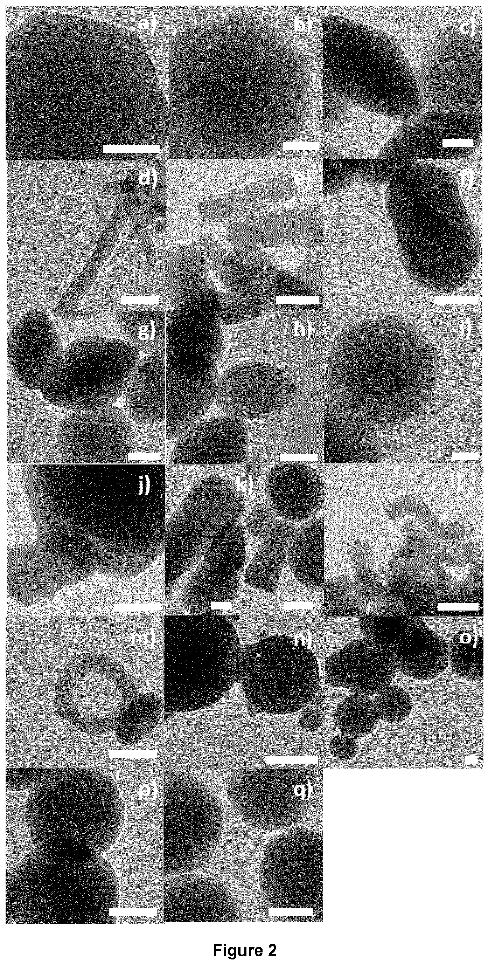

The morphology was further confirmed by transmission electron microscopy (TEM) analysis on the calcined material, revealing also a highly regular array of mesopores perpendicular to the flat surface (figure 2).

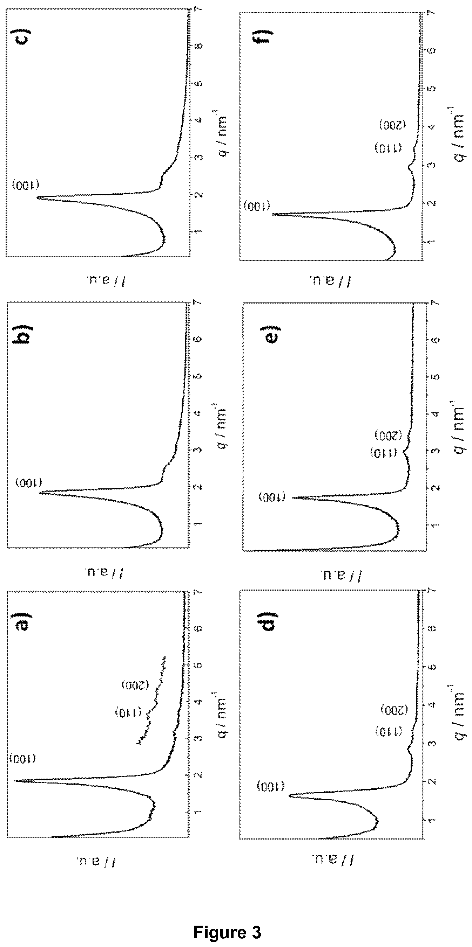

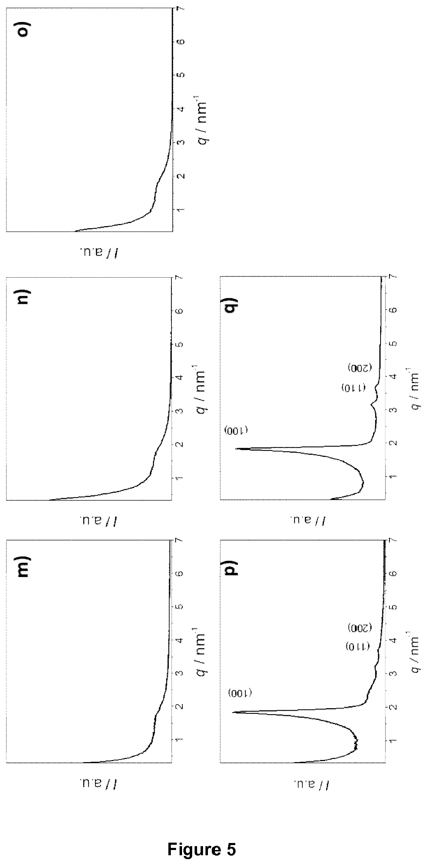

The mesostructure ordering of the particles was investigated by small angle X-ray scattering (SAXS) (figures 3, 4 and 5).

For the materials showing a good degree of ordering, the average pore diameter was also estimated from SAXS data (table 2), being the pore center-to-center distance given by the unit cell parameter and the pore diameter obtained subtracting 1.0 nm, an approximated value for the wall thickness **[17].**

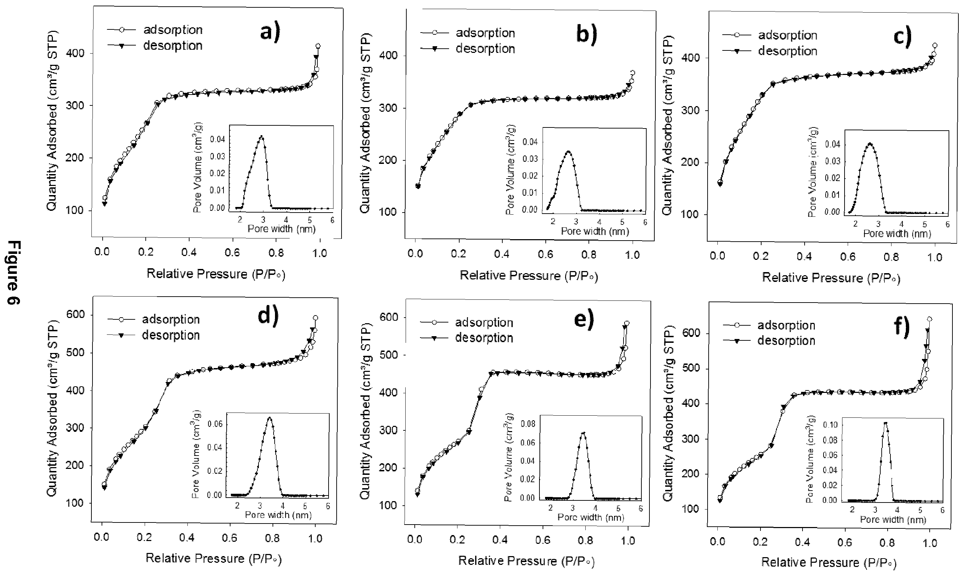

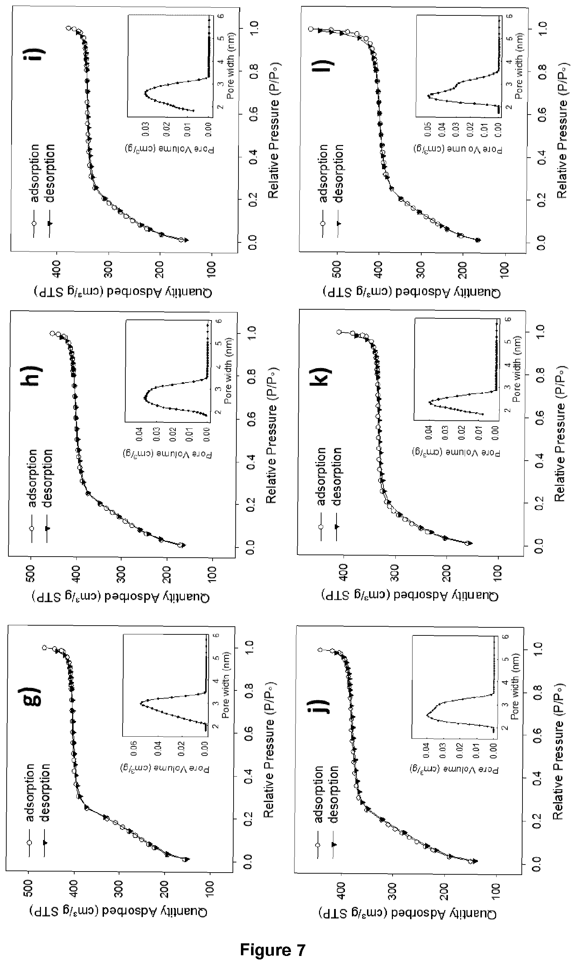

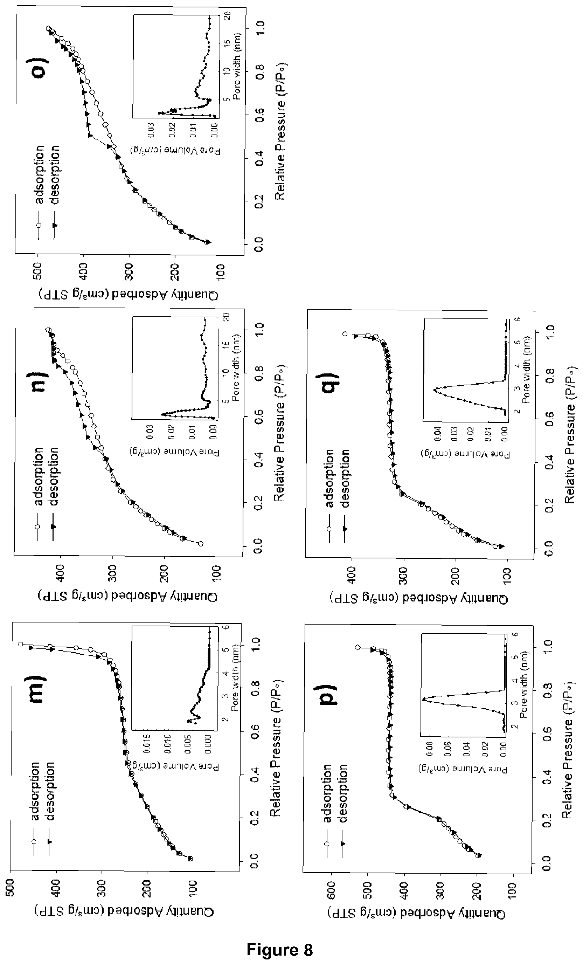

N₂ sorption measurement allowed to assess (figures 6, 7 and 8) the porosity properties of the materials. The values of pore diameter, total pore volume and BET specific area calculated from the porosimetry measurements are listed in Table 2.

### 3. Absence of intergrowth or stacking

Currently the main limitation to the use of hexagonal platelets is given by the fact that these platelets, of ca. 1 µm or bigger in size, show a high degree of intergrowth and/or twinned aggregation that prevent their integration onto surfaces. hMPs allow instead overcoming such limitation.

A monolayer assembly of the hMPs of example 1was obtained through covalent linkage on glass plates, following a modified procedure well-established to prepare assembled monolayer of zeolites crystals **[18].**

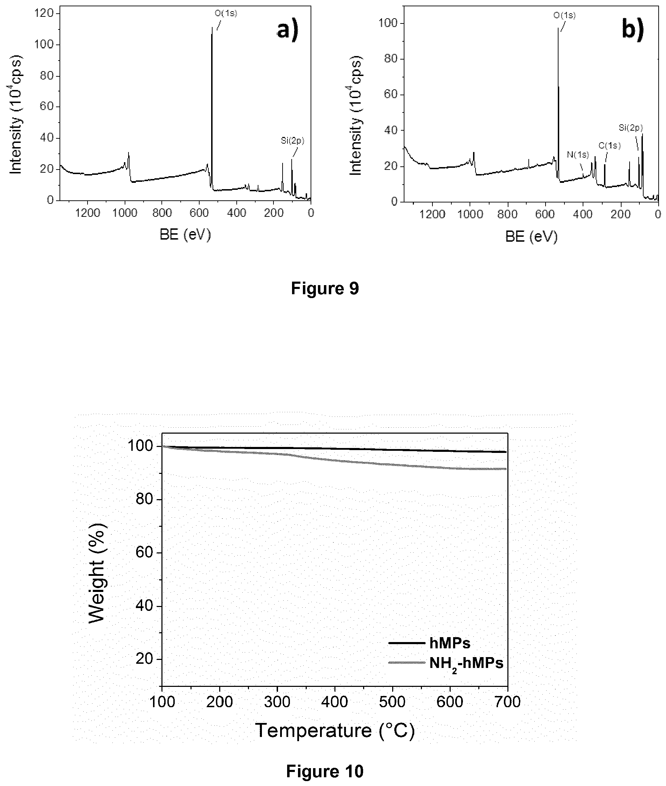

The monolayer was prepared according to the above mentioned method. The presence of amino groups was proven by the increase of ζ potential value from - 17.53 ± 1.79 mV for hMPs to + 9.12 ± 3.29 mV after the grafting. It was further confirmed by XPS survey analysis revealing the presence of N(1s) peak at 402 eV (Figure 9), and by TGA that detected a loss of ca 7 wt. % (Figure 10).

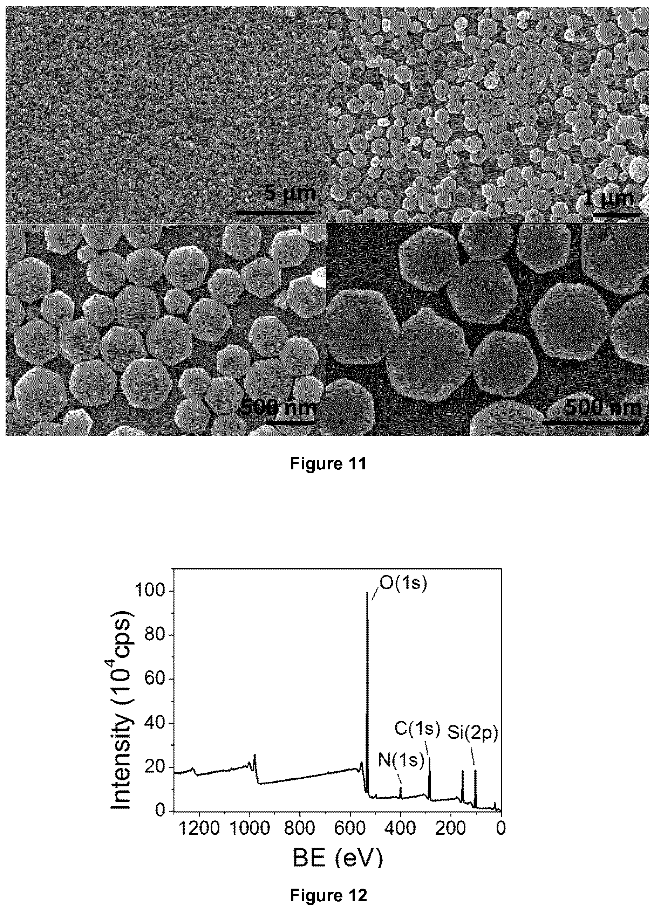

The monolayer is characterized by good coverage of the surface and homogeneity of the coating, with no significant tilting or stacking, where the particles lie parallel to the glass surface (Figure 11), thus exposing the accessible pores and providing a large porous surface. XPS survey analysis confirmed the presence of NH₂-hMPs onto the glass plate surface (Figure 12).

### 4. Effect of temperature

Examples 4, 5 and 6 and comparative example 17 were prepared by performing the reactions at 50 °C (see table 1).

The effect of temperature was also evaluated both in the presence and absence of the three BAs by performing the reactions at 50 °C. Morphology, mesostructure and porosity of the material obtained at 25 °C were retained (Figure 1 p) and q) and figure 2 p) and q)) when only CTAB was used.

Conversely, the presence of BAs led to twisted rod-like particles (Figure 1 d), e) and f) and figure 2 d), e) and f)). Those formed in the presence of LCA (Figure 1 d)) are characterized by length up to 1 µm and cross-section diameter of ca. 80 nm.

TEM analysis showed 2D chiral pores running along the rods and a twist pitch of ca. 40 nm can be estimated from the fringes (Figure 2 d)). As inferred from the SAXS pattern, 3.4 nm pores are arranged in a *p6mm* symmetry (Figure 3 d)).

The pore width was confirmed by N₂ adsorption (Figure 6 d)), which also provided a BET surface area of 1319 m²/g and a total pore volume of 0.92 cm³/g.

Twisted rods prepared in the presence of DCA were considerably shorter and characterized by a larger cross-section diameter, and a bigger twist pitch of ca. 100 nm (Figure 1 e) and figure 2 e)). They showed a hexagonal cross-section, and 3.4 nm pores hexagonally ordered (Figure 1 e), figure 2 e) and figure 3 e)) running along the particles. BET surface area and total pore volume were estimated as 1215 m²/g and 1.09 cm³/g.

The use of CA led to further shorter and wider rods ((Figure 1 d) and figure 2 d)), but did not affect either mesostructure or porosity properties (Figure 3d and 6d, Table 2, BET = 1130 m²/g and total pore volume = 0.99 cm³/g).

### 5. Effect of the ratio CTAB/NaDC

Examples 7 to 15 were prepared by varying the CTAB/NaDC ratio (see table 1).

A dramatic variation in the shape of particles occurs upon increase of the amount of NaDC when the reaction is performed at 25 °C, as revealed by SEM analysis of the materials (Figure 1 g) to o)). Upon introduction of 2.5 and 5 wt.% of NaDC (samples 7 and 8) in the mixture, the spherical geometry, which is observed when only CTAB is used (sample 16), is lost. In both the two samples the particles showed an oblate morphology (Figure 1 g) and h)) and width of ca. 350-400 nm and height ranging from 210 to 280 nm (Table 2). This trend is confirmed when 10% of NaDC is used (sample 9), but in this case platelets with hexagonal geometry are observed (Figure 1 i)). The platelets have a mean width of 498 ± 85 nm and height ranging from 190 to 270 nm. Notably, they do not show intergrowth or twinned aggregation. Upon further increase of the anionic surfactant the formation of elongated structures occurs, and the presence of short rods was observed when 15% NaDC (sample 10) was introduced (Figure 1 j)). A variety of structures was instead observed in sample 11 obtained using 30% of NaDC: rods, C-, S-, U-shaped twisted tubules and particles with conical and seashell-like geometry (Figure 1 k)). A further increase of NaDC led first to short fibres and toroids present in a smaller extent (sample 12, NaDC 40 wt.%, Figure 1 l)), and then to mainly toroidal structures with presence of toroids (sample 13, NaDC 50 wt.%, Figure 1 m)). Heterogeneous materials, constituted by amorphous materials and spherical particles of various size, up to 10-12 µm, was observed for samples 14 and 15 (NaDC 70 and 90 wt. %, Figure 1 n) and 1 o), respectively).

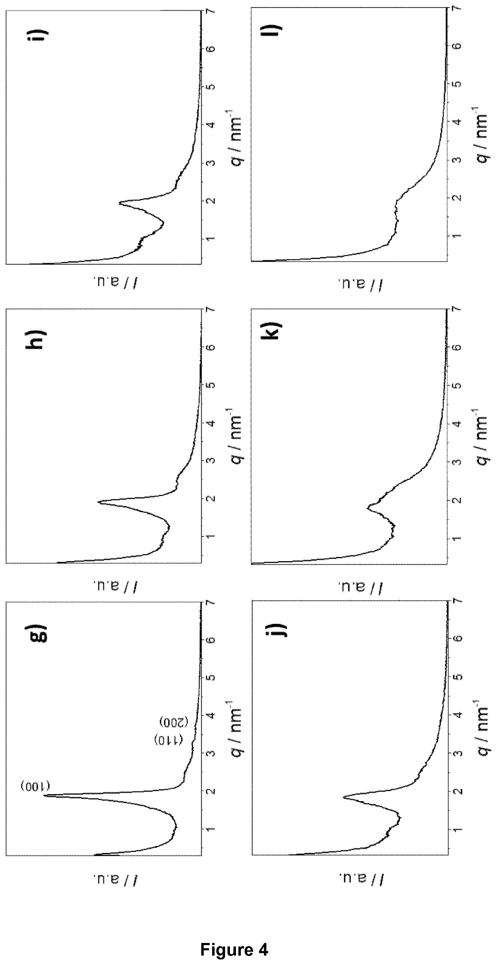

SAXS patterns, recorded after surfactant removal, revealed the presence of a hexagonal mesostructured (sample 7, Figure 4 g)). Upon increase of NaDC, the (100) Bragg peak becomes broader and broader and (110) and (200) peaks are no longer visible (Figure 4 h) to 5) o)). This suggests that a gradual loss of long range order occurs upon increase of the amount of NaDC. This trend is further confirmed by TEM analysis (Figure 2 g) to o)).

N₂ adsorption measurements revealed that the particles are characterized by good porosity properties (Figures 6, 7 and 8, table 2), with values in agreement with those reported in the literature for MCM-41 type materials **[19].** It has to be noted that for the toroidal particles, as expected, there is a significant decrease for pore volume and BET specific area values. Instead, for the heterogeneous materials of samples 14 and 15 it is possible to observe that the isotherms show a hysteresis, associated with a second pore size distribution (> 5 nm), probably attributable to the amorphous material present in the sample.

### 6. Degradable MSPs

Degradable mesoporous silica particles (sample 18) were prepared using a variation of example sample 4 (chiral rods prepared using CTAB/LCA). Sample 18 degradable MSPs were prepared using 10 mol% in respect to the Si(OEt)₄ of BTSPD (bis(3-triethoxysilylpropyl)disulphide).

CTAB (50 mg, 0.14 mmol) and LCA (4.6 mg, 0.012 mmol) were dissolved in distilled H₂O (25 mL) at 50 °C and stirred, aq. NH₃ 28 wt. % (1.42 mL, 22.90 mmol) was added and the mixture stirred at 750 rpm for 15 min. MeOH (0.10 mL, 3.95 mmol) was added and simultaneously TEOS (0.225 mL, 1.00 mmol) and BTSPD (51.2 µL, 0.11 mmol) were then added and the mixture allowed to stir for 90 min. The system was left under static conditions for further 20 h. The mixture was then centrifuged and the precipitate washed with distilled H₂O (x3) and EtOH (x2). The surfactants were removed through extraction in HCI/EtOH at 80 °C for 24 h.

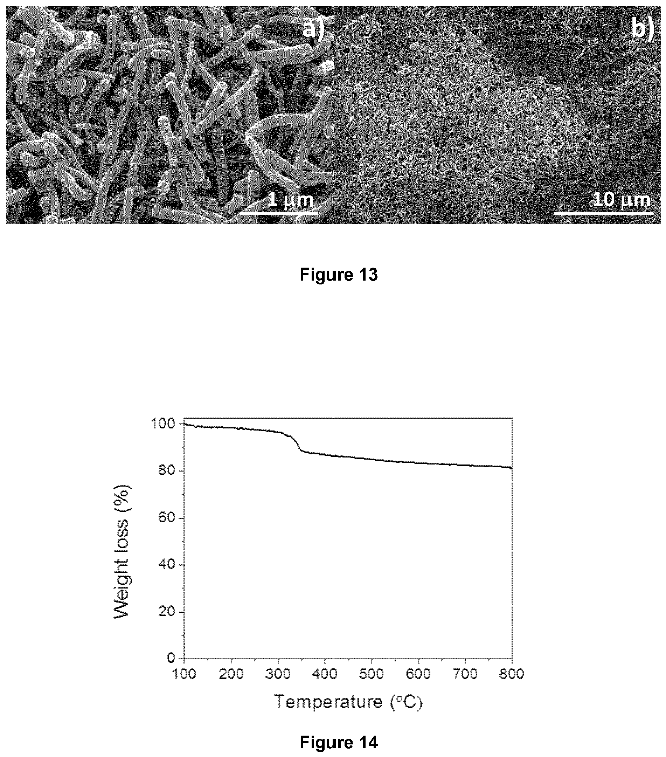

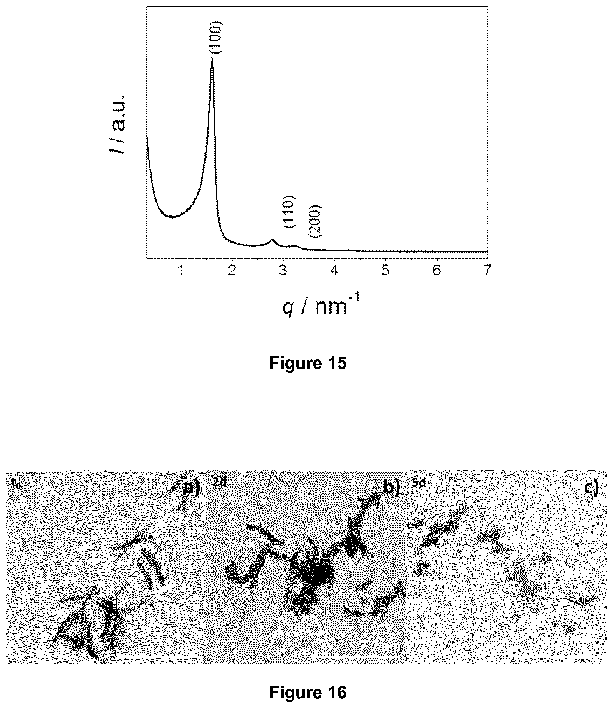

The morphology and size of twisted rods were retained as shown by SEM analysis that (Figure 13), while the organic content was determined by TGA and found to be 15 wt% (Figure 14). Despite the introduction of the organic linker, the mesostructure and pores properties were maintained as shown by the SAXS profile recorded on the particles (Figure 15). The SAXS pattern reveals the presence of hexagonally ordered pores with an average pore diameter that can be estimated as 3.5 nm.

Once the physicochemical characterization of the disulphide-doped particles has been carried out, the ability of the material to degrade on demand was tested. The disulphide-doped rods were well-dispersed (c = 0.1 mg/mL) in a 10 mM solution of GSH in PBS (pH = 7.4) and stirred left under stirring at 37 °C. Aliquots were taken and analysed with scanning transmission electron microscopy at to, and after 2 and 5 days. The STEM images (Figure 16) clearly show the degradation of the material.

### List of references

**1.**
   (a) Kresge, C. T.; Leonowicz, M. E.; Roth, W. J.; Vartuli, J. C.; Beck, J. S. Nature 1992, 359, 710;
   (b) Zhao, D.; Feng, J.; Huo, Q.; Melosh, N.; Fredrickson, G. H.; Chmelka, B. F.; Stucky, G. D. Science 1998, 279, 548.
**2.**
   (a) Slowing, I. I.; Trewyn, B. G.; Giri, S.; Lin, V. S. Y. Adv. Funct. Mater. 2007, 17, 1225;
   (b) Li, Z.; Barnes, J. C.; Bosoy, A.; Stoddart, J. F.; Zink, J. I. Chem. Soc. Rev. 2012, 41, 2590;
   (c) Slowing, I. I.; Vivero-Escoto, J. L.; Trewyn, B. G.; Lin, V. S. Y. J. Mater. Chem. 2010, 20, 7924.
**3.**
   (a) Lin, H.-P.; Mou, C.-Y. Acc. Chem. Res. 2002, 35, 927;
   (b) Wan, Y.; Zhao Chem. Rev. 2007, 107, 2821*;*
   (c) Huo, Q.; Margolese, D. I.; Stucky, G. D. Chem. Mater. 1996, 8, 1147;
   (d) Wu, S.-H.; Mou, C.-Y.; Lin, H.-P. Chem. Soc. Rev. 2013, 42, 3862.
**4.**
   (a) Boissière, C.; Kümmel, M.; Persin, M.; Larbot, A.; Prouzet, E. Adv. Funct. Mater. 2001, 11, 129;
   (b) Gallis, K. W.; Araujo, J. T.; Duff, K. J.; Moore, J. G.; Landry, C. C. Adv. Mater. 1999, 11, 1452;
**5.** Che, S.; Liu, Z.; Ohsuna, T.; Sakamoto, K.; Terasaki, O.; Tatsumi, T. Nature 2004, 429, 281;
**6.** Sujandi; Park, S.-E.; Han, D.-S.; Han, S.-C.; Jin, M.-J.; Ohsuna, T. Chem. Commun. 2006, 4131**.**
**7.**
   (a) Manzano, M.; Aina, V.; Areán, C. O.; Balas, F.; Cauda, V.; Colilla, M.; Delgado, M. R.; Vallet-Regí, M. Chem. Eng. J. 2008, 137, 30;
   (b) Huang, X.; Teng, X.; Chen, D.; Tang, F.; He, J. Biomaterials 2010, 31, 438;
   (c) Huang, X.; Li, L.; Liu, T.; Hao, N.; Liu, H.; Chen, D.; Tang, F. ACS Nano 2011, 5, 5390;
   (d) Blanco, E.; Shen, H.; Ferrari, M. Nat Biotech 2015, 33, 941;
   (e) Trewyn, B. G.; Nieweg, J. A.; Zhao, Y.; Lin, V. S. Y. Chem. Eng. J. 2008, 137, 23.
8. Edler, K. J. Aust. J. Chem. 2005, 58, 627.
9. Yu, C.; Fan, J.; Tian, B.; Zhao, D. Chem. Mater. 2004, 16, 889.
10.
   (a) Chan, H. B. S.; Budd, P. M.; Naylor, T. d. J. Mater. Chem. 2001, 11, 951;
   (b) Qu, Q.; Zhou, G.; Ding, Y.; Feng, S.; Gu, Z. J. Non-Cryst. Solids 2014, 405, 104.
**11.**
   (a) S.-H. Wu, C.-Y. Mou and H.-P. Lin, Chem. Soc. Rev. 2013, 42, 3862;
   (b) I. I. Slowing, J. L. Vivero-Escoto, B. G. Trewyn and V. S. Y. Lin, J. Mater. Chem. 2010, 20, 7924;
**12.**
   (a) H. Yang, G. Vovk, N. Coombs, I. Sokolov and G. A. Ozin, J. Mater. Chem. 1998, 8, 743;
   (b) S. P. Naik, S. P. Elangovan, T. Okubo and I. Sokolov, J. Phys. Chem. C 2007, 111, 11168;
   (c) H. B. S. Chan, P. M. Budd and T. d. Naylor, J. Mater. Chem. 2001, 11, 951;
   (d) E. M. Björk, F. Söderlind and M. Odén, Langmuir 2013, 29, 13551;
   (e) P. Linton, H. Wennerstrom and V. Alfredsson, PCCP 2010, 12, 3852;
**13.**
   (a) Q. Qu, G. Zhou, Y. Ding, S. Feng and Z. Gu, J. Non-Cryst. Solids 2014, 405, 104;
   (b) L. Han, Y. Zhou, T. He, G. Song, F. Wu, F. Jiang and J. Hu, J. Mater. Sci. 2013, 48, 5718;
   (c) M. Grün, K. K. Unger, A. Matsumoto and K. Tsutsumi, Microporous Mesoporous Mater. 1999, 27, 207;
   (d) B. Wang, C. Chi, W. Shan, Y. Zhang, N. Ren, W. Yang and Y. Tang, Angew. Chem. Int. Ed. 2006, 45, 2088;
   (e) Q. Cai, Z.-S. Luo, W.-Q. Pang, Y.-W. Fan, X.-H. Chen and F.-Z. Cui, Chem. Mater. 2001, 13, 258;
   (f) N. Hao, X. Chen, K. W. Jayawardana, B. Wu, M. Sundhoro and M. Yan, Biomater. Sci. 2016, 4, 87;
   (g) X. Wang, Y. Zhang, W. Luo, A. A. Elzatahry, X. Cheng, A. Alghamdi, A. M. Abdullah, Y. Deng and D. Zhao, Chem. Mater. 2016, 28, 2356;
**14.** M. Grün, I. Lauer and K. K. Unger, Adv. Mater. 1997, 9, 254;
**15.**
   (a) Yoon, K. B. Acc. Chem. Res. 2007, 40, 29;
   (b) Zabala Ruiz, A.; Li, H.; Calzaferri, G. Angew. Chem. Int. Ed. 2006, 45, 5282;
   (c) Greco, A.; Maggini, L.; De Cola, L.; De Marco, R.; Gentilucci, L. Bioconjugate Chem. 2015, 26, 1873;
   (d) Kehr, N. S.; Schafer, A.; Ravoo, B. J.; De Cola, L. Nanoscale 2010, 2, 601;
**16.** S. Brunauer, P. H. Emmett, E. Teller J. Am. Chem. Soc., 1938, 60, 309;
**17.** Chen, C.-Y.; Li, H.-X.; Davis, M. E. Microporous Mater. 1993, 2, 17.
**18.**
   (a) Yoon, K. B. Acc. Chem. Res. 2007, 40, 29;
   (b) Zabala Ruiz, A.; Li, H.; Calzaferri, G. Angew. Chem. Int. Ed. 2006, 45, 5282;
   (c) Greco, A.; Maggini, L.; De Cola, L.; De Marco, R.; Gentilucci, L. Bioconjugate Chem. 2015, 26, 1873;
   (d) Kehr, N. S.; Schafer, A.; Ravoo, B. J.; De Cola, L. Nanoscale 2010, 2, 601;
**19.** M. Kruk, M. Jaroniec, Y. Sakamoto, O. Terasaki, R. Ryoo and C. H. Ko, J.of Phys. Chem. B 2000, 104, 292*.*
**20.**
   (a) L. Maggini, I. Cabrera, A. Ruiz-Carretero, Eko A. Prasetyanto, Eric Robinet, Luisa De Cola, Nanoscale, 2016, 8, 7240;
   (b) US2016/0333145.

## Claims

1. Use of a bile acid or an alkali metal cation salt thereof, in the synthesis of mesoporous silica particles.

2. A process of synthesis of mesoporous silica particles comprising a step of mixing, in an aqueous medium, in the presence of a catalyst:
- a quaternary ammonium surfactant,
- a bile acid, or an alkali metal cation salt thereof,
- a silicon alkoxide, and
- optionally an alkoxysilane bearing a responsively cleavable bond.

3. The process according to claim 2, wherein the mass ratio of bile acid or an alkali metal cation salt thereof/quaternary ammonium surfactant is comprised between 0.025 and 0.90.

4. The process according any one of claims 2 to 3, wherein the catalyst is a base, preferably the base is chosen in the group of sodium or potassium hydroxide and aqueous ammonia.

5. The process according any one of claims 2 to 4, wherein the molar concentration of the silicon alkoxide in the aqueous medium is comprised between 0.02 and 0.1 mol/L, preferably between 0.04 and 0.07 mol/L and more preferably 0.042 mol/L.

6. The process according any one of claims 2 to 5, wherein the molar concentration of the bile acid, or alkali metal cation salt thereof, in the aqueous medium is comprised between 0.23 and 4.0 mmol/L.

7. The process according any one of claims 2 to 6, wherein the molar concentration of the quaternary ammonium surfactant in the aqueous medium is comprised between 4.0 and 6.0 mM, preferably 5.2 mM.

8. The process according any one of claims 2 to 7, comprising the steps of:
a) mixing, in an aqueous medium:
- the catalyst,
- quaternary ammonium surfactant,
- the bile acid, or alkali metal cation salt thereof,
- the silicon alkoxide, and
- optionally an alkoxysilane bearing a responsively cleavable bond.
to obtain a reaction mixture wherein,
- the molar ratio of quaternary ammonium surfactant /bile acid or alkali metal cation salt thereof is comprised between 1 and 25, and
- the molar ratio of quaternary ammonium surfactant / silicon alkoxide is comprised between 0.06 and 0.14,
b) stirring the reaction mixture obtained in step a) thereby producing the mesoporous silica particles,
the process being preferably is carried out at a temperature ≥ 25°C.

9. Process according to any one of claims 2 to 8, wherein the silicon alkoxide is chosen in the group consisting of silicon alkoxides of formula I:
Si(OR)₄ Formula I
wherein R is a linear or branched alkyl chain comprising from 1 to 3 carbon atoms, optionally comprising heteroatoms chosen in the group comprising N, S, and/or O.

10. Process according to any one of claims 2 to 9, wherein the quaternary ammonium surfactant is chosen in the group consisting of compounds of formula II:
R³-N⁺(R⁴)₃,X⁻ Formula II
wherein R³ is a C₁₀-C₂₀ linear or branched alkyl chain, R⁴, identical or different, is a C₁-C₃ alkyl chain and X⁻ an halide anion.

11. Process according to any one of preceding claims, wherein the bile acid is of formula III: 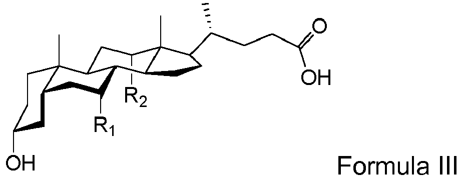 or alkali metal cation salt thereof, preferably sodium salt,
wherein R₁ and R₂, identical or different, represent either -H or -OH.

12. A mesoporous silica particle obtained by the process or use according to any claims 1 to 11.

13. A mesoporous silica particle **characterized in that** the pore diameter size of the particle is < 4 nm, preferably < 3.5 nm and more preferably comprised between 2.5 and 3 nm.

14. The mesoporous silica particle according to claim12 or 13, wherein shape of the particle is spherical, hexagonal, oblate or twisted rod, optionally chiral, preferably said particle has a related size distribution comprised between 200 nm and 1100 nm and a related height comprised between 60 and 150 nm.

15. Use of a mesoporous silica particle according to any claim 12 to 14 in adsorption techniques, targeted release, catalysis, drug delivery, materials templating.
